# EUROPEAN PATENT SPECIFICATION

(11) **EP 3 734 209 B1**
(45) Date of publication and mention of the grant of the patent: **14.01.2026**
(21) Application number: 19171723.0
(22) Date of filing: 30.04.2019
(51) Int. Cl.: F28B 1/00, B01D 1/00, C02F 1/08, F28D 9/00, F28F 3/08, F28F 3/10

(54) **A PLATE HEAT EXCHANGER FOR TREATMENT OF A FEED, A PLATE FOR A PLATE HEAT EXCHANGER FOR TREATMENT OF A FEED, A GASKET FOR USE TOGETHER WITH THE HEAT EXCHANGER PLATE AND A METHOD OF PRODUCING A HEAT EXCHANGER FOR TREATMENT OF A FEED**
PLATTENWÄRMETAUSCHER ZUR BEHANDLUNG EINER EINSPEISUNG, PLATTE FÜR EINEN PLATTENWÄRMETAUSCHER ZUR BEHANDLUNG EINER EINSPEISUNG, DICHTUNG ZUR VERWENDUNG ZUSAMMEN MIT DER WÄRMETAUSCHERPLATTE UND VERFAHREN ZUR HERSTELLUNG EINES WÄRMETAUSCHERS ZUR BEHANDLUNG EINER EINSPEISUNG
ÉCHANGEUR THERMIQUE À PLAQUE POUR LE TRAITEMENT D'UN ALIMENT, PLAQUE POUR ÉCHANGEUR DE CHALEUR À PLAQUES POUR LE TRAITEMENT D'UN ALIMENT, JOINT DESTINÉ À ÊTRE UTILISÉ AVEC LA PLAQUE D'ÉCHANGEUR DE CHALEUR ET PROCÉDÉ DE FABRICATION D'UN ÉCHANGEUR DE CHALEUR POUR LE TRAITEMENT D'UN ALIMENT

(43) Date of publication of application: 04.11.2020
(73) Proprietor: Alfa Laval Corporate AB, 221 00 Lund (SE)
(72) Inventor: BLOMGREN, Fredrik, 239 41 Falsterbo (SE)
(74) Representative: Alfa Laval Attorneys

(56) References cited:
- WO-A1-01/67021
- WO-A1-2014/065742
- CN-A- 109 141 083
- FR-A1- 2 528 164
- US-A- 3 532 161
- US-A- 5 587 053

## Description

The present invention relates to a plate heat exchanger for treatment of a feed, a plate for a plate heat exchanger for treatment of a feed, a gasket for use together with the heat exchanger plate and a method of producing a heat exchanger for treatment of a feed.

### Background of the invention

FR 2 528 164 discloses a plate heat exchanger having 6 ports located in 2 rows of three, which are symmetrical about a centre axis of each plate. Equipment for desalination of seawater, where one or several plate packages of heat exchanger plates form the main components in the process, has been manufactured since many years. SE 464 938 B discloses such a desalination plant comprising a plate package provided in a cylindrical container. The heat exchanger plates have no ports for steam, but instead the space outside the heat exchanger plates is used as one or several flow paths for the steam, depending on the kind of process. The container is a substantially cylindrical pressure vessel. In a large plant including several plate packages, these may be located in the longitudinal direction of the cylinder. To a certain extent, the container is limiting for the size of the plant, if not several containers are allowed to be included in the plant.

The applicant company has since several years produced a fresh water generator without any tank where the evaporation, separation and condensation take place in the plate package. The details may be found in the international application WO 2006 / 104443 A1 assigned to the Alfa Laval Corporate AB. It is disclosing a plate heat exchanger for desalination. The heat exchanger has first and second plate interspaces formed in alternating order in the heat exchanger. The first plate interspace forms an evaporation section, a separation section and a condensation section, whereas the second plate interspace form heating and cooling sections, and a separation section between the heating and cooling sections. The advantage of the above-mentioned heat exchanger is that it does not need any container since the whole treatment of the seawater is performed in the plate package.

The above plate heat exchanger has centrally located ports for heating fluid, cooling fluid and fresh water and the ports for steam and feed are symmetrically arranged about a central axis of the heat exchanger plate. In this way only one plate type is needed. The first and second plate interspaces are formed by using two different gaskets and arranging the heat exchange plates face to face. In this way the corrugations in the opposing plates will form a cross shaped pattern.

The centrally located ports and the ports adjacent the edges of the heat exchanger plate implies that up to six gasket elements will be required along the width of the heat exchanger plate. The gaskets occupy space on the heat exchanger plate which cannot be used for the process. The width of the gasket will be about the same for a large heat exchanges as for a small heat exchanger. For a large heat exchanger, the space occupied by the gaskets may be negligible, however, for a small heat exchanger it may be significant.

There is an increased need for smaller fresh water generators which may be used on board smaller vessels. When reducing the size of the fresh water generator as discussed above, the gaskets will still take up essentially the same amount of space. This will make the smaller fresh water generators less area efficient compared to the large fresh water generators.

Further prior art includes CN106587227 which discloses a double-effect plate type seawater desalination device. Two effects having two condensation sections in the same plate interspace may be used in the same plate package for increasing the output of the heat exchanger.

KR20030029263 relates to a heat exchanger for automobiles. The heat exchanger plate is divided into an upside-down L-shaped evaporator plate part and a square heater core plate part.

KR19980049548 relates to a heat exchanger having a heating section and an evaporation section.

WO 2010/013608 A1 relates to a plate heat exchanger used as evaporator or condenser.

It is therefore an object of the present invention to provide a plate heat exchanger for treatment of a feed which has a more area efficient design while still needing only one plate type.

### Summary of the invention

The above object has been realised in a first aspect by plate heat exchanger as set out in independent claim 1.

The feed is typically sea water which is vaporized in an evaporation section located in the same plate package. The vaporized feed enters a separation section in which any liquid parts remaining in the vaporized feed are removed, thereafter the vaporized feed enters the condensation section. In the separation section, the feed is typically allowed to flow in both plate interspaces. The vaporized feed enters the condensation section whereby the passages are used to allow vaporized feed to flow through the heat exchanger plate into the condensation section. In the condensation section, the vaporized feed is condensed into a condensate, typically fresh water in case the feed is sea water. The condensate is extracted through an outlet.

The symmetrical placement of the ports allows the individual plates to be flipped over, i.e. turned 180 degrees about the centre axis, while keeping the ports at the same relative position. By keeping the ports and the gasket grooves symmetric about the centre axis, only one plate type is needed. The heat exchanger plates may thus be identical and the difference between the first and second plate interspaces may be manifested by the use of different gaskets only. In such case the first and second pair of ports are essentially identical and may be finally defined by the gasket only. The ports within each pair may differ in size and shape, however, the corresponding port on the opposite side of the centre axis of each port of the pair should be identical in size and shape. The longitudinal direction which is parallel to the central axis is understood to correspond to the vertical direction when the plate heat exchanger is in the normal position of use. The condensation section is then located above the separation section, which in turn is located above the evaporation section.

By having apertures in the heat exchanger plate that are used for both the cooling fluid and the vapor passage, the number of gaskets along the width of the heat exchanger plate may be reduced compared to having the ports in the centre. In the present case and compared to the prior art having centrally located ports, the number of gaskets along the width of the heat exchanger plate has been reduced from four to three along most of the longitudinal direction of the condensation section the heat exchanger plate, and even from six to four along some parts of the longitudinal direction of the heat exchanger plate. Also, the number of ports along the width of the heat exchanger plate has been reduced from three to only two. The gaskets are typically made of rubber.

According to the invention, each heat exchanger plate defines a fifth port adjacent the first pair of ports, and, a sixth port adjacent the second pair of ports, the fifth port and the sixth port being of substantially equal size and configuration and arranged symmetrically about the centre axis, the sixth port of each rotated plate match the fifth port of the adjacent heat exchanger plate and defining a passage for vaporized feed, whereas the fifth port of each rotated plate match the sixth port of the adjacent heat exchanger plate and defining a condensate outlet being sealed off relative to the cooling section in the first plate interspace.

By using a fifth port adjacent the second edge and a corresponding sixth port symmetrically arranged at the first edge, the heat exchanger plate as a whole will be symmetric as the fifth and sixth ports will be interchangeable. This allows the heat exchanger plates to be identical and rotatable about the central axis.

According to a further embodiment of the first aspect, the feed is sea water. The desalination of sea water into fresh water is the typical application, however, other applications such as concentration of fruit juices etc may also be feasible.

According to a further embodiment of the first aspect, each heat exchanger plate is corrugated in the condensation section, thereby forming ridges and valleys, whereby a ridge in the condensation section corresponds to a valley in the opposite cooling section and vice versa. The corrugations increase the heat transfer between the condensation section and the cooling section.

According to a further embodiment of the first aspect, the opposing heat exchanger plates are arranged such that opposing ridges contact each other in contact points. The contact points may be used to bear the loads which may arise due to different pressures in the pate interspaces.

According to a further embodiment of the first aspect, the ridges of opposing heat exchanger plates form a cross shaped pattern. A cross shaped pattern may generate turbulence in the fluid, which may increase the heat transfer. Using identical heat exchanger plates, every second plate may be flipped over, i.e. turned 180 degrees about the centre axis in order to arrange such that opposing ridges are contacting each other at contacts points and forming a cross shaped pattern of ridges facing each other. The port location will not change when the heat exchanger plate is flipped over, however, the corrugated pattern on the heat exchanger plate will be rotated 180 degrees about the centre axis.

According to a further embodiment of the first aspect, the ports of each pair of ports are vertically disposed relative to each other when the plate package is in its normal position of use. In this way the ports within each pair are disposed one below the other. According to a further embodiment of the first aspect, the cooling section comprises a horizontal flow guiding element for guiding the flow of cooling fluid towards the first longitudinal edge. In this way the flow in the cooling section may be directed from the inlet at the second edge, towards the first edge and then back towards the outlet at the second edge.

The above object has been realised in a second aspect by method of producing a plate heat exchanger for treatment of a feed as set out in claim 8.

The method according to the second aspect may preferably be used to produce the heat exchanger according to the first aspect.

### Brief description of the drawings

Fig. 1 discloses a side view of a plate heat exchanger of the invention.
Fig. 2A discloses a view of the front side of a plate heat exchanger of a first version.
Fig. 2B discloses a view of the rear side of a plate heat exchanger of a first version.
Fig. 3A discloses a view of the front side of a plate heat exchanger not falling under the scope of the claims.
Fig. 3B discloses a view of the rear side of a plate heat exchanger not falling under the scope of the claims.

### Detailed description of the drawings

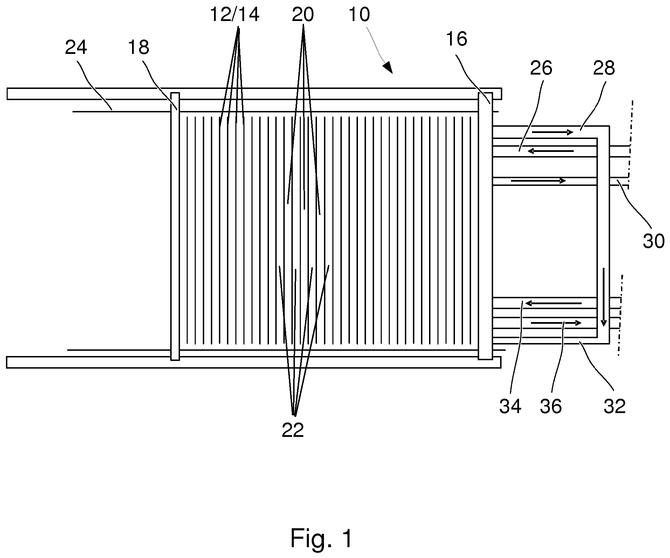

Fig. 1 discloses a side view of a plate heat exchanger 10 of the invention. In the following description an application with respect to desalination of seawater is described, i.e. the feed is sea water. However, it is to be noted that the invention is not limited to the feed being sea water but may also refer to any other treatment, for instance distillation of a liquid. The plate heat exchanger comprises a large number of compression moulded heat exchanger plates 12, which are provided in parallel to each other and successively in such a way that they form a plate package 14. The plate package 14 is provided between a frame plate 16 and a pressure plate 18.

Between the heat exchanger plates 12, first plate interspaces 20 and second plate interspaces 22 are formed. The first plate interspaces 20 and the second plate interspaces 22 are provided in an alternating order in the plate package 14 in such a way that substantially each first plate interspace 20 is surrounded by two second plate interspaces 22, and substantially each second plate interspace 22 is surrounded by two first plate interspaces 20. Different sections in the plate package 14 are delimited from each other by means of gaskets (not shown) in each plate interspace whereby the first plate interspace 20 includes a first type gasket (not shown) and the second plate interspace 22 includes a second type gasket (not shown). The plate package 14, i.e. the heat exchanger plates 12 and the gaskets (not shown) provided therebetween, is kept together by means of schematically indicated tightening bolts 24 in a manner known per se.

The plate package 14 is connected to a cooling water inlet conduit 26, a cooling water outlet conduit 28 and a fresh water outlet conduit 30. The cooling water is typically sea water and thus the cooling water outlet conduit 28 is connected to a sea water inlet conduit 32 in order to recover the heat absorbed by the cooling water. The plate package 12 is further connected to a heating fluid inlet conduit 34 and a heating fluid outlet conduit 36. The heating fluid is used for vaporizing the feed, i.e. the sea water which is entering the plate package 14 through the sea water inlet conduit 32. The heating fluid may be heated water, such as jacket water from a ship's engine. The condensed fresh water is leaving the plate package 14 through the fresh water outlet conduit 30.

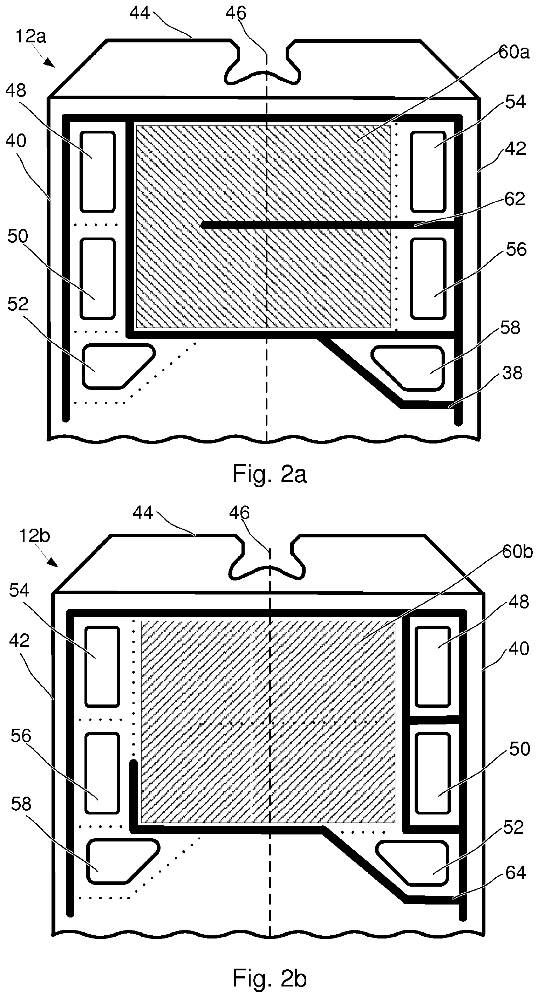

Fig. 2A discloses a view of the front side of a heat exchanger plate, designated 12a and a first type gasket 38 of a plate heat exchanger according to a first embodiment of the present invention. Only the upper part of the heat exchanger plate 12a and first type gasket 38 is shown here.

Each heat exchanger plate 12a has a first longitudinal edge 40, an opposite second longitudinal edge 42 substantially parallel with the first longitudinal edge 40, an upper edge 44 including an outtake for a hanging and/or steering axle/device and a lower edge (not shown) located opposite the upper edge 44. The heat exchanger plate 12a further defines a centre axis 46 extending in the longitudinal direction substantially centrally between the longitudinal edges 40, 42. The centre axis 46 extending substantially vertically when the plate package is located in a normal position of use.

The heat exchanger plate 12a defines a number of ports which will be discussed below. A first port 48 and a second port 50 form a first pair of ports adjacent the first longitudinal edge 40. A third port 54 and a fourth port 56 form a second pair of ports adjacent the second longitudinal edge 42. A fifth port 52 is provided below the second port 50 adjacent the first longitudinal edge 40. A sixth port 58 is provided below the fourth port 56 adjacent the second longitudinal edge 42. The ports 48 50 52 and 54 56 58 are arranged symmetrically about the centre axis 44.

On the front side of the heat exchanger plate 12a, the first port 48, the second port 50 and the fifth port 52 form passages for allowing vaporized feed to pass through the heat exchanger plate 12a. The third port 54 form a cooling water outlet port and the fourth port 56 form a cooling water inlet port. The cooling water outlet port 54 is located above the cooling water inlet port 56. The sixth port 58 form a fresh water outlet port. The cooling water inlet port 54 is communicating with the cooling water inlet conduit, the cooling water outlet port 56 is communicating with the cooling water outlet conduit and the fresh water outlet port 58 is communicating with the fresh water outlet conduit.

The first type gasket 38 surrounds the heat exchanger plate 12a and defines a cooling section 60a in communication with the cooling water inlet port 56 and the cooling water outlet port 54. The heat exchanger plate 12a is corrugated at the cooling section 60a and the gasket 52 defines a flow guiding element 62 for guiding the flow of cooling water to make a 180 degree turn from the cooling water inlet port 56 to the cooling water outlet port 54 while covering the cooling section 60a. The fresh water outlet port 58 is surrounded by the first type gasket 38 preventing any access by the cooling water to the fresh water outlet port 58.

The first port 48, the second port 50 and the fifth port 52 correspond in size and shape to the third port 54, the fourth port 56 and the sixth port 58, respectively, and they are arranged symmetrically about the centre axis 46. In this way, the heat exchanger plate may be rotated about the centre axis 46 without changing the configuration of the six ports 48, 50, 52, 54, 56, 58. The gasket 38 is arranged such that the first port 48, the second port 50, the fifth port 52 and the sixth port 58 are sealed off relative to the cooling section 60a, the cooling water inlet port 56 and the cooling water outlet port 54.

The cooling section 60a is corrugated defining valleys and ridges in order to increase the heat transfer through the heat exchanger plate 12a. A first plate interspace is formed by arranging two plates 12a face-to-face having the first type gasket 38 located in-between the heat exchanger plates 12a. The two plates 12a forming the plate interspace are identical, however, one of the heat exchanger plates 12a is rotated 180 degrees about the centre axis 46. In this way the corrugation of the heat exchanger plates 12a may be arranged such that opposing ridges form a cross shaped pattern and contact each other at contact points.

Fig. 2B discloses a rotated heat exchanging plate 12b corresponding to a view of the rear side of a heat exchanger plate 12a and a second type gasket 64 of a plate heat exchanger according to the first embodiment of the present invention. The heat exchanger plate 12b is thus the same as the heat exchanger plate 12a except that it has been rotated 180 degrees about the centre axis 46.

The rear side includes a gasket 64 being different from the gasket 38 of the front side. The gasket 64 surrounds the heat exchanger plate 12b and defines a condensation section 60b being the opposite side of the cooling section on the utility side. In the present rotated plate the ports have been mirrored about the centre axis 46. Thus, the condensation section 60b being in communication with the third port 54, the fourth port 56, fifth port 52 and the sixth port 58, whereas the first port 48 and the second port 50 are now cooling water inlet port and cooling water outlet port which are both sealed off relative to each other and to the condensation section 60b. The rear side forms a second plate interspace.

As seen from the rotated heat exchanger plate 12b, the third port 54, the fourth port 56 and the sixth port 58 are the passages for allowing vaporized feed to pass through the heat exchanger plate 12b, whereas the fifth port 52 form the fresh water outlet port. The first port 48 and the second port 50 form the cooling water outlet port and the cooling water inlet port, respectively, and are sealed off relative to each other and to the condensation section 60b.

The lower part of the heat exchanger plate has not been presented below, however, it includes an evaporation section and a separation section below the condensation section and/or the cooling section as generally known in the art from e.g. WO 2006 / 104443 A1. The separation section received evaporated feed from the evaporation section and the vaporized feed emerges from the lower part of both plate interspaces. The vaporized feed on the utility plate interspace uses the passage ports to enter the process plate interspace. The vaporized feed enters the condensation section where it condenses from the cooling provided by the cooling section on the opposite side of the heat exchanger plate. The condensed feed is collected at the fresh water outlet port which is communicating with the fresh water outlet conduit.

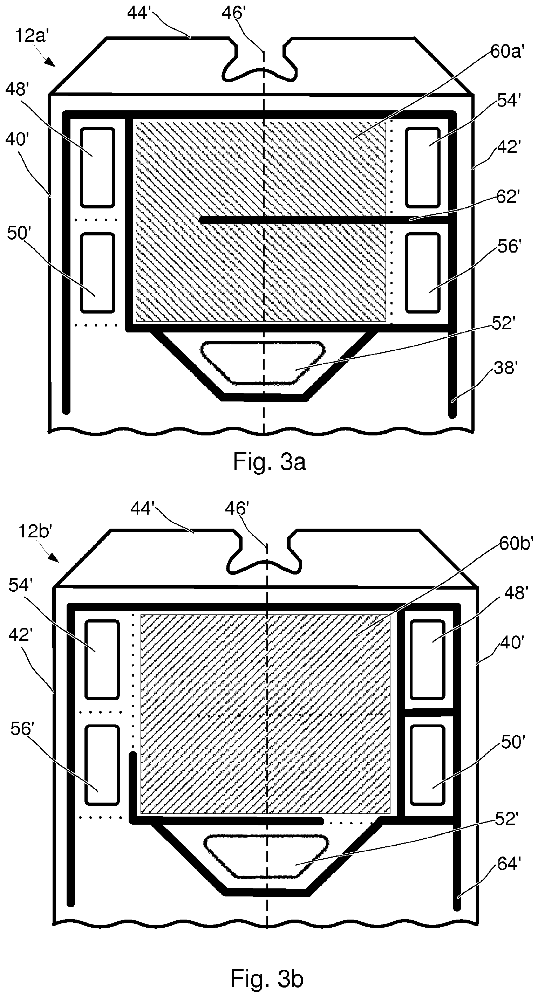

Fig. 3A discloses a view of the front side of a heat exchanger plate 12a' and a first type gasket 38' of a plate heat exchanger which does not fall under the scope of the present invention. The the fifth port and the sixth port are merged to a fresh water outlet port 52' which is centrally and symmetrically located about the centre axis 44'. The third vapor passage port has thus been omitted. In this way a centralized outlet conduit may be realized while keeping the heat exchanger plate symmetrical. The working principle is identical to the previous embodiment. The gasket 38' prevents access between the cooling section 60a' and the fresh water outlet port 52' on the front side of the heat exchanger plate 12a'.

Fig. 3B discloses a view of the rear side of a heat exchanger plate 12b' and a second type gasket 64' of a plate heat exchanger which does not fall under the scope of the present invention. Access is provided between the condensation section 60b' and the fresh water outlet port 52' for allowing the condensed feed to flow from the condensation section 60b' to the fresh water outlet port 52'.

### Reference numerals

10. plate heat exchanger
12. heat exchanger plates
12a. heat exchanger plate, front side
12b. heat exchanger plate, rear side
14. plate package
16. frame plate
18. pressure plate
20. first plate interspaces
22. second plate interspaces
24. tightening bolts
26. cooling water inlet conduit
28. cooling water outlet conduit
30. fresh water outlet conduit
32. sea water inlet conduit
34. heating fluid inlet conduit
36. heating fluid outlet conduit
38. first type gasket
40. first longitudinal edge
42. second longitudinal edge
44. upper edge
46. centre axis
48. first port
50. second port
52. fifth port
54. third port
56. fourth port
58. sixth port
60a. cooling section
60b. condensation section
62. guiding element
64. second type gasket
A (') denotes a similar features in a different embodiment.

## Claims

1. A plate heat exchanger (10) for treatment of a feed, the plate heat exchanger (10) including a plate package (14) comprising a plurality of heat exchanging plates (12) arranged successively in the plate package (14), each heat exchanging plate defining:
a front side (12a) and an opposite rear side (12b),
a first longitudinal edge (40), an opposite second longitudinal edge (42) and a centre axis (46) extending parallel to and substantially centrally between the first longitudinal edge (40) and the second longitudinal edge (42), and
a first port (48) and a second port (50) forming a first pair of ports located adjacent the first longitudinal edge (40), and, a third port (54) and a fourth port (56) forming a second pair of ports located adjacent the second longitudinal edge (42), the first pair of ports and the second pair of ports being of equal size and configuration and arranged symmetrically about the centre axis (46), whereby every second heat exchanger plate (12) forms a rotated plate being rotated 180 degrees about the centre axis (46) such that the respective front sides (12a) and rear sides (12b) of adjacent heat exchanger plates (12) faces each other, thereby establishing first plate interspaces (20) between the front sides (12a) and second plate interspaces (22) between the rear sides (12b) of adjacent heat exchanger plates, the second pair of ports of each rotated plate match the first pair of ports of the adjacent heat exchanger plate (12) and define passages for vaporized feed, whereas the first pair of ports of each rotated plate match the second pair of ports of the adjacent heat exchanger plate (12) and defining passages for cooling fluid, whereby each first plate interspace (20) including a first type gasket (38) defining a cooling section (60a) for circulating a cooling fluid for cooling the condensing section through the heat exchanger plate, whereby each second plate interspace (22) including a second type gasket (64) defining a condensation section (60b) opposite the cooling section (60a) for receiving and condensing a vaporized feed, the passages for vaporized feed communicating with the condensation section (60b) and being sealed off relative to the cooling section (60a), whereas the passages for cooling fluid communicating with cooling section (60a) and being sealed off relative to the condensation section (60b),
wherein each heat exchanger plate (12) defines a fifth port (52) adjacent the first pair of ports, and, a sixth port (58) adjacent the second pair of ports, the fifth port (52) and the sixth port (58) being of substantially equal size and configuration and arranged symmetrically about the centre axis (46), the sixth port (58) of each rotated plate match the fifth port (52) of the adjacent heat exchanger plate (12) and defining a passage for vaporized feed, whereas the fifth port (52) of each rotated plate match the sixth port (58) of the adjacent heat exchanger plate (12) and defining a condensate outlet being sealed off relative to the cooling section (60a) in the first plate interspace (20).

2. The plate heat exchanger (10) according to any of the preceding claims, wherein each heat exchanger plate (12) is corrugated in the condensation section (60b), thereby forming ridges and valleys, whereby a ridge in the condensation section (60b) corresponds to a valley in the opposite cooling section (60a) and vice versa.

3. The plate heat exchanger (10) according to claim 2, wherein opposing heat exchanger plates (12) are arranged such that opposing ridges contact each other in contact points.

4. The plate heat exchanger (10) according to claim 3, wherein the ridges of opposing heat exchanger plates form a cross shaped pattern.

5. The plate heat exchanger (10) according to any of the preceding claims, wherein the ports of each pair of ports are vertically disposed relative to each other when the plate package (14) is in its normal position of use.

6. The plate heat exchanger (10) according to any of the preceding claims, wherein the cooling section (60a) comprises a horizontal flow guiding element for guiding the flow of cooling fluid towards the first longitudinal edge (40).

7. The use of a plate heat exchanger (10) according to any of the preceding claims, wherein the feed is sea water.

8. A method of producing a plate heat exchanger (10) for treatment of a feed by providing a plurality of heat exchanging plates (12) arranged successively in the plate package (14), each heat exchanging plate defining:
a front side (12a) and an opposite rear side (12b),
a first longitudinal edge (40), an opposite second longitudinal edge (42) and a centre axis (46) extending parallel to and substantially centrally between the first longitudinal edge (40) and the second longitudinal edge (42), and
a first port (48) and a second port (50) forming a first pair of ports located adjacent the first longitudinal edge (40), and a third port (54) and a fourth port (56) forming a second pair of ports located adjacent the second longitudinal edge (42), the first pair of ports and the second pair of ports being of equal size and configuration and arranged symmetrically about the centre axis (46),
whereby every second heat exchanger plate (12) forms a rotated plate being rotated 180 degrees about the centre axis (46) such that the respective front sides (12a) and rear sides (12b) of adjacent heat exchanger plates faces each other, thereby establishing first plate interspaces (20) between the front sides (12a) and second plate interspaces (22) between the rear sides (12b) of adjacent heat exchanger plates, the second pair of ports of each rotated plate match the first pair of ports of the adjacent heat exchanger plate (12) and define passages for vaporized feed, whereas the first pair of ports of each rotated plate match the second pair of ports of the adjacent heat exchanger plate (12) and defining passages for cooling fluid,
whereby each first plate interspace (20) including a first type gasket (38) defining a cooling section (60a) for circulating a cooling fluid for cooling the condensing section through the heat exchanger plate, whereby each second plate interspace (22) including a second type gasket (64) defining a condensation section (60b) opposite the cooling section (60a) for receiving and condensing a vaporized feed, the passages for vaporized feed communicating with the condensation section (60b) and being sealed off relative to the cooling section (60a), whereas the passages for cooling fluid communicating with cooling section (60a) and being sealed off relative to the condensation section (60b),
wherein each heat exchanger plate (12) defines a fifth port (52) adjacent the first pair of ports, and, a sixth port (58) adjacent the second pair of ports, the fifth port (52) and the sixth port (58) being of substantially equal size and configuration and arranged symmetrically about the centre axis (46), the sixth port (58) of each rotated plate match the fifth port (52) of the adjacent heat exchanger plate (12) and defining a passage for vaporized feed, whereas the fifth port (52) of each rotated plate match the sixth port (58) of the adjacent heat exchanger plate (12) and defining a condensate outlet being sealed off relative to the cooling section (60a) in the first plate interspace (20).

## Patentansprüche

1. Plattenwärmetauscher (10) zur Behandlung einer Einspeisung, wobei der Plattenwärmetauscher (10) ein Plattenpaket (14) einschließt, das eine Vielzahl von Wärmetauscherplatten (12) umfasst, die nacheinander in dem Plattenpaket (14) angeordnet sind, wobei jede Wärmetauscherplatte Folgendes definiert:
eine Vorderseite (12a) und eine gegenüberliegende Rückseite (12b),
eine erste Längskante (40), eine gegenüberliegende zweite Längskante (42) und eine Mittelachse (46), die sich parallel zu und im Wesentlichen mittig zwischen der ersten Längskante (40) und der zweiten Längskante (42) erstreckt, und
einen ersten Anschluss (48) und einen zweiten Anschluss (50), die ein erstes Anschlusspaar bilden, das der ersten Längskante (40) benachbart ist, und einen dritten Anschluss (54) und einen vierten Anschluss (56), die ein zweites Anschlusspaar bilden, das der zweiten Längskante (42) benachbart ist, wobei das erste Anschlusspaar und das zweite Anschlusspaar von gleicher Größe und Konfiguration und symmetrisch um die Mittelachse (46) herum angeordnet sind, wobei jede zweite Wärmetauscherplatte (12) eine gedrehte Platte bildet, die derart um 180 Grad um die Mittelachse (46) herum gedreht ist, dass die jeweiligen Vorderseiten (12a) und Rückseiten (12b) benachbarter Wärmetauscherplatten (12) einander zugewandt sind, wodurch erste Plattenzwischenräume (20) zwischen den Vorderseiten (12a) und zweite Plattenzwischenräume (22) zwischen den Rückseiten (12b) benachbarter Wärmetauscherplatten etabliert werden, wobei das zweite Anschlusspaar jeder gedrehten Platte dem ersten Anschlusspaar der benachbarten Wärmetauscherplatte (12) zugeordnet ist und Durchgänge für verdampfte Einspeisung definiert, wohingegen das erste Anschlusspaar jeder gedrehten Platte dem zweiten Anschlusspaar der benachbarten Wärmetauscherplatte (12) zugeordnet ist und Durchgänge für ein Kühlfluid definiert, wobei jeder erste Plattenzwischenraum (20) eine Dichtung (38) eines ersten Typs einschließt, die einen Kühlabschnitt (60a) zum Zirkulieren eines Kühlfluids zum Kühlen des Kondensationsabschnitts durch die Wärmetauscherplatte hindurch definiert, wobei jeder zweite Plattenzwischenraum (22) eine Dichtung (64) eines zweiten Typs einschließt, die einen dem Kühlabschnitt (60a) gegenüberliegenden Kondensationsabschnitt (60b) zum Aufnehmen und Kondensieren einer verdampften Einspeisung definiert, wobei die Durchgänge für verdampfte Einspeisung mit dem Kondensationsabschnitt (60b) kommunizieren und in Bezug auf den Kühlabschnitt (60a) abgedichtet sind, wohingegen die Durchgänge für das Kühlfluid mit Kühlabschnitt (60a) kommunizieren und in Bezug auf den Kondensationsabschnitt (60b) abgedichtet sind,
wobei jede Wärmetauscherplatte (12) einen fünften Anschluss (52) dem ersten Anschlusspaar benachbart und einen sechsten Anschluss (58) dem zweiten Anschlusspaar benachbart definiert, wobei der fünfte Anschluss (52) und der sechste Anschluss (58) von im Wesentlichen gleicher Größe und Konfiguration und symmetrisch um die Mittelachse (46) herum angeordnet sind, wobei der sechste Anschluss (58) jeder gedrehten Platte dem fünften Anschluss (52) der benachbarten Wärmetauscherplatte (12) zugeordnet ist und einen Durchgang für verdampfte Einspeisung definiert, wohingegen der fünfte Anschluss (52) jeder gedrehten Platte dem sechsten Anschluss (58) der benachbarten Wärmetauscherplatte (12) zugeordnet ist und einen Kondensatauslass definiert, der in dem ersten Plattenzwischenraum (20) in Bezug auf den Kühlabschnitt (60a) abgedichtet ist.

2. Plattenwärmetauscher (10) nach einem der vorstehenden Ansprüche, wobei jede Wärmetauscherplatte (12) in dem Kondensationsabschnitt (60b) gewellt ist, wodurch Erhöhungen und Senkungen gebildet werden, wobei eine Erhöhung in dem Kondensationsabschnitt (60b) einer Senkung in dem gegenüberliegenden Kühlabschnitt (60a) entspricht und umgekehrt.

3. Plattenwärmetauscher (10) nach Anspruch 2, wobei gegenüberliegende Wärmetauscherplatten (12) derart angeordnet sind, dass gegenüberliegende Erhöhungen einander an Kontaktpunkten berühren.

4. Plattenwärmetauscher (10) nach Anspruch 3, wobei die Erhöhungen der gegenüberliegenden Wärmetauscherplatten ein kreuzförmiges Muster bilden.

5. Plattenwärmetauscher (10) nach einem der vorstehenden Ansprüche, wobei die Anschlüsse jedes Anschlusspaares in Bezug aufeinander vertikal angeordnet sind, wenn das Plattenpaket (14) in seiner normalen Verwendungsposition vorliegt.

6. Plattenwärmetauscher (10) nach einem der vorstehenden Ansprüche, wobei der Kühlabschnitt (60a) ein horizontales Strömungsführungselement zum Führen der Kühlfluidströmung in Richtung der ersten Längskante (40) umfasst.

7. Verwendung eines Plattenwärmetauschers (10) nach einem der vorstehenden Ansprüche, wobei die Einspeisung Meerwasser ist.

8. Verfahren zum Herstellen eines Plattenwärmetauschers (10) zur Behandlung einer Einspeisung durch Bereitstellen einer Vielzahl von Wärmetauscherplatten (12), die nacheinander in dem Plattenpaket (14) angeordnet sind, wobei jede Wärmetauscherplatte Folgendes definiert:
eine Vorderseite (12a) und eine gegenüberliegende Rückseite (12b),
eine erste Längskante (40), eine gegenüberliegende zweite Längskante (42) und eine Mittelachse (46), die sich parallel zu und im Wesentlichen mittig zwischen der ersten Längskante (40) und der zweiten Längskante (42) erstreckt, und
einen ersten Anschluss (48) und einen zweiten Anschluss (50), die ein erstes Anschlusspaar bilden und sich der ersten Längskante (40) benachbart befinden, und einen dritten Anschluss (54) und einen vierten Anschluss (56), die ein zweites Anschlusspaar bilden und sich der zweiten Längskante (42) benachbart befinden, wobei das erste Anschlusspaar und das zweite Anschlusspaar von gleicher Größe und Konfiguration und symmetrisch um die Mittelachse (46) herum angeordnet sind,
wobei jede zweite Wärmetauscherplatte (12) eine gedrehte Platte bildet, die derart um 180 Grad um die Mittelachse (46) herum gedreht ist, dass die jeweiligen Vorderseiten (12a) und Rückseiten (12b) benachbarter Wärmetauscherplatten einander zugewandt sind, wodurch erste Plattenzwischenräume (20) zwischen den Vorderseiten (12a) und zweite Plattenzwischenräume (22) zwischen den Rückseiten (12b) benachbarter Wärmetauscherplatten etabliert werden, wobei das zweite Anschlusspaar jeder gedrehten Platte dem ersten Anschlusspaar der benachbarten Wärmetauscherplatte (12) zugeordnet ist und Durchgänge für verdampfte Einspeisung definiert, wohingegen das erste Anschlusspaar jeder gedrehten Platte dem zweiten Anschlusspaar der benachbarten Wärmetauscherplatte (12) zugeordnet ist und Durchgänge für das Kühlfluid definiert,
wobei jeder erste Plattenzwischenraum (20) eine Dichtung (38) eines ersten Typs einschließt, die einen Kühlabschnitt (60a) zum Zirkulieren eines Kühlfluids zum Kühlen des Kondensationsabschnitts durch die Wärmetauscherplatte hindurch definiert, wobei jeder zweite Plattenzwischenraum (22) eine Dichtung (64) eines zweiten Typs einschließt, die einen dem Kühlabschnitt (60a) gegenüberliegenden Kondensationsabschnitt (60b) zum Aufnehmen und Kondensieren einer verdampften Einspeisung definiert, wobei die Durchgänge für verdampfte Einspeisung mit dem Kondensationsabschnitt (60b) kommunizieren und in Bezug auf den Kühlabschnitt (60a) abgedichtet sind, wohingegen die Durchgänge für das Kühlfluid mit dem Kühlabschnitt (60a) kommunizieren und in Bezug auf den Kondensationsabschnitt (60b) abgedichtet sind,
wobei jede Wärmetauscherplatte (12) einen fünften Anschluss (52) dem ersten Anschlusspaar benachbart und einen sechsten Anschluss (58) dem zweiten Anschlusspaar benachbart definiert, wobei der fünfte Anschluss (52) und der sechste Anschluss (58) von im Wesentlichen gleicher Größe und Konfiguration und symmetrisch um die Mittelachse (46) herum angeordnet sind, wobei der sechste Anschluss (58) jeder gedrehten Platte dem fünften Anschluss (52) der benachbarten Wärmetauscherplatte (12) zugeordnet ist und einen Durchgang für verdampfte Einspeisung definiert, wohingegen der fünfte Anschluss (52) jeder gedrehten Platte dem sechsten Anschluss (58) der benachbarten Wärmetauscherplatte (12) zugeordnet ist und einen Kondensatauslass definiert, der in dem ersten Plattenzwischenraum (20) in Bezug auf den Kühlabschnitt (60a) abgedichtet ist.

## Revendications

1. Échangeur de chaleur à plaques (10) pour le traitement d'un aliment, l'échangeur de chaleur à plaques (10) incluant un ensemble de plaques (14) comprenant une pluralité de plaques d'échange de chaleur (12) disposées successivement dans l'ensemble de plaques (14), chaque plaque d'échange de chaleur définissant :
une face avant (12a) et une face arrière opposée (12b),
un premier bord longitudinal (40), un second bord longitudinal opposé (42) et un axe central (46) s'étendant parallèlement et sensiblement au centre entre le premier bord longitudinal (40) et le second bord longitudinal (42), et
un premier orifice (48) et un deuxième orifice (50) formant une première paire d'orifices situés près du premier bord longitudinal (40), et un troisième orifice (54) et un quatrième orifice (56) formant une seconde paire d'orifices situés près du second bord longitudinal (42), la première paire d'orifices et la seconde paire d'orifices étant de taille et de configuration identiques et disposées symétriquement autour de l'axe central (46), selon lequel chaque seconde plaque d'échangeur de chaleur (12) forme une plaque pivotante pivotant de 180 degrés autour de l'axe central (46), de sorte que les faces avant (12a) et les faces arrière (12b) respectives des plaques d'échangeur de chaleur adjacentes (12) se font face, créant ainsi de premiers espaces intermédiaires de plaque (20) entre les faces avant (12a) et des seconds espaces intermédiaires de plaque (22) entre les faces arrière (12b) de plaques d'échangeur de chaleur adjacentes, la seconde paire d'orifices de chaque plaque pivotante correspond à la première paire d'orifices de la plaque d'échangeur de chaleur adjacente (12) et définit des passages pour l'alimentation vaporisée, tandis que la première paire d'orifices de chaque plaque pivotante correspond à la seconde paire d'orifices de la plaque d'échangeur de chaleur adjacente (12) et définit des passages pour le fluide de refroidissement, selon lequel chaque premier espace intermédiaire de plaque (20) incluant un joint de premier type (38) définit une section de refroidissement (60a) pour la circulation d'un fluide de refroidissement destiné à refroidir la section de condensation à travers la plaque d'échangeur de chaleur, selon lequel chaque second espace intermédiaire de plaque (22) incluant un joint de seconde type (64) définit une section de condensation (60b) opposée à la section de refroidissement (60a) pour recevoir et condenser une alimentation vaporisée, les passages pour l'alimentation vaporisée communiquant avec la section de condensation (60b) et étant étanches par rapport à la section de refroidissement (60a), tandis que les passages pour le fluide de refroidissement communiquent avec la section de refroidissement (60a) et sont étanches par rapport à la section de condensation (60b),
dans lequel chaque plaque d'échangeur de chaleur (12) définit un cinquième orifice (52) adjacent à la première paire d'orifices, et un sixième orifice (58) adjacent à la seconde paire d'orifices, le cinquième orifice (52) et le sixième orifice (58) étant de taille et de configuration sensiblement égales et disposés symétriquement autour de l'axe central (46), le sixième orifice (58) de chaque plaque pivotante correspond au cinquième orifice (52) de la plaque d'échangeur de chaleur adjacente (12) et définit un passage pour l'alimentation vaporisée, tandis que le cinquième orifice (52) de chaque plaque pivotante correspond au sixième orifice (58) de la plaque d'échangeur de chaleur adjacente (12) et définit une sortie de condensat étanche par rapport à la section de refroidissement (60a) dans le premier espace intermédiaire de plaque (20).

2. Échangeur de chaleur à plaques (10) selon l'une quelconque des revendications précédentes, dans lequel chaque plaque d'échangeur de chaleur (12) est ondulée dans la section de condensation (60b), formant ainsi des crêtes et des vallées, selon lequel une crête dans la section de condensation (60b) correspond à une vallée dans la section de refroidissement opposée (60a) et inversement.

3. Échangeur de chaleur à plaques (10) selon la revendication 2, dans lequel les plaques d'échangeur de chaleur opposées (12) sont disposées de telle sorte que les crêtes opposées se touchent au niveau de points de contact.

4. Échangeur de chaleur à plaques (10) selon la revendication 3, dans lequel les crêtes des plaques d'échangeur de chaleur opposées forment un motif en forme de croix.

5. Échangeur de chaleur à plaques (10) selon l'une quelconque des revendications précédentes, dans lequel les orifices de chaque paire d'orifices sont disposés verticalement l'un par rapport à l'autre lorsque l'ensemble de plaques (14) est dans sa position normale d'utilisation.

6. Échangeur de chaleur à plaques (10) selon l'une quelconque des revendications précédentes, dans lequel la section de refroidissement (60a) comprend un élément guide de flux horizontal pour guider le flux de fluide de refroidissement vers le premier bord longitudinal (40).

7. Utilisation d'un échangeur de chaleur à plaques (10) selon l'une quelconque des revendications précédentes, dans lequel l'aliment est de l'eau de mer.

8. Procédé de fabrication d'un échangeur de chaleur à plaques (10) pour le traitement d'un aliment, consistant à prévoir une pluralité de plaques d'échange de chaleur (12) disposées successivement dans l'ensemble de plaques (14), chaque plaque d'échange de chaleur définissant :
une face avant (12a) et une face arrière opposée (12b),
un premier bord longitudinal (40), un second bord longitudinal opposé (42) et un axe central (46) s'étendant parallèlement et sensiblement au centre entre le premier bord longitudinal (40) et le second bord longitudinal (42), et
un premier orifice (48) et un deuxième orifice (50) formant une première paire d'orifices situés près du premier bord longitudinal (40), et un troisième orifice (54) et un quatrième orifice (56) formant une seconde paire d'orifices situés près du second bord longitudinal (42), la première paire d'orifices et la seconde paire d'orifices étant de taille et de configuration identiques et disposées symétriquement autour de l'axe central (46),
selon lequel chaque seconde plaque d'échangeur de chaleur (12) forme une plaque pivotante pivotant de 180 degrés autour de l'axe central (46), de sorte que les faces avant (12a) et les faces arrière (12b) respectives des plaques d'échangeur de chaleur adjacentes se font face, créant ainsi de premiers espaces intermédiaires de plaque (20) entre les faces avant (12a) et des seconds espaces intermédiaires de plaque (22) entre les faces arrière (12b) de plaques d'échangeur de chaleur adjacentes, la seconde paire d'orifices de chaque plaque pivotante correspond à la première paire d'orifices de la plaque d'échangeur de chaleur adjacente (12) et définit des passages pour l'alimentation vaporisée, tandis que la première paire d'orifices de chaque plaque pivotante correspond à la seconde paire d'orifices de la plaque d'échangeur de chaleur adjacente (12) et définit des passages pour le fluide de refroidissement,
selon lequel chaque premier espace intermédiaire de plaque (20) incluant un joint de premier type (38) définit une section de refroidissement (60a) pour la circulation d'un fluide de refroidissement destiné à refroidir la section de condensation à travers la plaque d'échangeur de chaleur, selon lequel chaque second espace intermédiaire de plaque (22) incluant un joint de seconde type (64) définit une section de condensation (60b) opposée à la section de refroidissement (60a) pour recevoir et condenser une alimentation vaporisée, les passages pour l'alimentation vaporisée communiquant avec la section de condensation (60b) et étant étanches par rapport à la section de refroidissement (60a), tandis que les passages pour le fluide de refroidissement communiquent avec la section de refroidissement (60a) et sont étanches par rapport à la section de condensation (60b),
dans lequel chaque plaque d'échangeur de chaleur (12) définit un cinquième orifice (52) adjacent à la première paire d'orifices, et un sixième orifice (58) adjacent à la seconde paire d'orifices, le cinquième orifice (52) et le sixième orifice (58) étant de taille et de configuration sensiblement égales et disposés symétriquement autour de l'axe central (46), le sixième orifice (58) de chaque plaque pivotante correspond au cinquième orifice (52) de la plaque d'échangeur de chaleur adjacente (12) et définit un passage pour l'alimentation vaporisée, tandis que le cinquième orifice (52) de chaque plaque pivotante correspond au sixième orifice (58) de la plaque d'échangeur de chaleur adjacente (12) et définit une sortie de condensat étanche par rapport à la section de refroidissement (60a) dans le premier espace intermédiaire de plaque (20).
